# EUROPÄISCHE PATENTSCHRIFT

(11) **EP 4 171 437 B1**
(45) Veröffentlichungstag und Bekanntmachung des Hinweises auf die Patenterteilung: **10.09.2025**
(21) Anmeldenummer: 21802688.8
(22) Anmeldetag: 02.11.2021
(51) Int. Cl.: A61C 17/06, F02F 7/00, B23P 19/04

(54) **HALTEVORRICHTUNG FÜR EINEN ABSCHEIDER UND ABSCHEIDER MIT EINER SOLCHEN**
HOLDER FOR A SEPARATOR AND SEPARATOR WITH SUCH A HOLDER
DISPOSITIF DE MAINTIEN POUR UN SÉPARATEUR ET SÉPARATEUR LE COMPRENANT

(30) Priorität: 02.11.2020 AT 5021320 U
(43) Veröffentlichungstag der Anmeldung: 03.05.2023
(73) Patentinhaber: Pregenzer, Bruno, 6414 Mieming (AT)
(72) Erfinder: Pregenzer, Bruno, 6414 Mieming (AT)
(74) Vertreter: Laufhütte, Dieter
(86) Internationale Anmeldenummer: PCT/EP2021/080299
(87) Internationale Veröffentlichungsnummer: WO 2022/090554

(56) Entgegenhaltungen:
- EP-B1- 0 263 344
- EP-B1- 0 263 344
- WO-A1-92/18062
- WO-A1-92/18062
- WO-A1-94/22392
- WO-A1-94/22392
- DE-U1- 202014 007 310
- DE-U1- 202014 007 310
- GB-A- 608 808
- GB-A- 608 808
- US-A- 3 682 373
- US-A- 3 682 373
- US-A1- 2019 365 966

## Beschreibung

Die vorliegende Erfindung betrifft eine Haltevorrichtung für einen Abscheider, insbesondere für einen Dentalabscheider, nach dem Oberbegriff des Anspruchs 1 sowie einen Abscheider, insbesondere Dentalabscheider, mit einer solchen Haltevorrichtung.

Derartige Abscheider kommen beispielsweise im zahnärztlichen Bereich zum Einsatz und dienen der Trennung unterschiedlicher Phasen eines aus einer zahnärztlichen Absaugeinrichtung oder Speischale stammenden Abwassergemisches. Das Abwassergemisch kann beispielsweise dem Abscheider als Drei-Phasen-Gemisch mit flüssigen, gasförmigen und festen Bestandteilen zugeführt und durch diesen in die unterschiedlichen Bestandteile aufgetrennt werden. Ebenfalls sind Abscheider bekannt, die lediglich eine Flüssigkeit-Luft-Trennung des Abwassergemisches durchführen.

Die Separation der einzelnen Bestandteile im Abscheider erfolgt typischerweise unter Verwendung mindestens eines durch eine Motoreinheit rotatorisch antreibbaren Elements wie z.B. einer Zentrifugentrommel zur Abtrennung fester Bestandteile oder eines Laufrads zur Verteilung des Abwassergemisches und/oder zur Abtrennung von Luft.

Ein derartiger Dentalabscheider zur Drei-Phasen-Trennung ist beispielsweise aus der WO 92/18062 bekannt. Hierbei erfolgt die Trennung der Feststoffpartikel aus der Flüssigkeit mittels einer durch einen Motor rotatorisch antreibbaren Vollmantelzentrifuge, während die aus der Zentrifuge übertretende Flüssigkeit über einen Flüssigkeitsauslass abfließt. Nach jeder Zentrifugierphase fließen die Feststoffpartikel mit einem Restflüssigkeitsanteil über einen Feststoffablass in einen unterhalb der Zentrifuge angeordneten, abnehmbaren Sedimentationsbehälter. Über eine ebenfalls motorisch angetriebene Pumpe kann überstehende Flüssigkeit aus dem Sedimentationsbehälter zurück in die Zentrifugentrommel befördert werden.

WO 94/22392A1 offenbart eine vibrationsdämpfende Halterung für einen Dentalabscheider, der mindestens einen Eingang, mindestens einen Ausgang, und eine Zentrifuge aufweist, wobei die Halterung mit Leitungsanschlüssen versehen ist, und jeder Ein- und Ausgang des in die Halterung eingesetzten Abscheiders mit einem Leitungsanschluss der Halterung verbunden ist. Die Halterung weist zwei Teile auf, wobei der erste Teil ortsfest montierbar ist und auf dem zweiten Teil der Abscheider abnehmbar anordenbar ist. Die beiden Teile sind mittels vibrationsdämpfender Zwischenstücke miteinander verbunden.

Der Betrieb der drehbaren Komponenten im Abscheider mittels des Motors führt zur Erzeugung von hochfrequenten Schwingungen, die sich über das Gehäuse des Abscheiders auf umgebende Strukturen übertragen können, an denen der Abscheider befestigt bzw. gelagert ist. Zudem können sich diese Schwingungen negativ auf die Abdichtungen beim Zu- und Ablauf der dem Abscheider zugeführten oder von diesem abgeführten Fluidvolumenströme auswirken. Aus diesem Grund müssen die mit dem Abscheider verbundenen Fluidleitungen in aufwändiger Weise stabil befestigt und abgedichtet werden, was einer schnellen und einfachen Montage bzw. Demontage im Wege steht.

Vor diesem Hintergrund liegt der vorliegenden Erfindung die Aufgabe zugrunde, eine Vorrichtung zur Befestigung eines derartigen Abscheiders bereitzustellen, welche eine einfache und schnelle Montage bzw. Demontage ermöglicht.

Erfindungsgemäß wird diese Aufgabe durch eine Vorrichtung mit den Merkmalen des Anspruchs 1 gelöst. Vorteilhafte Ausführungsformen der Erfindung ergeben sich aus den Unteransprüchen und der nachfolgenden Beschreibung.

Demnach wird eine Haltevorrichtung für einen Abscheider, insbesondere für einen Dentalabscheider, vorgeschlagen, welche einen Trägerrahmen und ein Befestigungsmittel zur Befestigung des Abscheiders an der Haltevorrichtung umfasst. Erfindungsgemäß umfasst die Haltevorrichtung mindestens ein mit dem Trägerrahmen verbundenes Verbindungsstück mit einem ersten Anschluss und einem mit dem ersten Anschluss fluidleitend verbundenen zweiten Anschluss. An den ersten Anschluss ist eine Fluidleitung zum Zu- oder Abführen eines Fluids zum oder vom Abscheider und an den zweiten Anschluss ein Fluidanschluss, beispielsweise ein Gemischeinlass oder ein Luftabzug, des Abscheiders anschließbar. Am Verbindungsstück ist dabei ein Dämpfungselement zur Dämpfung von Schwingungen des Abscheiders vorgesehen.

Das erfindungsgemäße Aufhängesystem ermöglicht eine Entkopplung der Fluidleitungsanschlüsse von während des Betriebs erzeugten Schwingungen des Abscheiders. Die mindestens eine Fluidleitung, bei der es sich um einen Schlauch handeln kann, wird an den ersten Anschluss des mindestens einen Verbindungsstücks angeschlossen, beispielsweise über ein entsprechendes Schlauchanschlussstück. Die Verbindung zwischen dem fluidleitenden Verbindungsstück und dem Abscheider erfolgt über den zweiten Anschluss, welcher entweder direkt an den Fluidanschluss des Abscheiders oder über ein Zwischenstück (beispielsweise einen Verbindungsschlauch, ein Verbindungsrohr oder dergleichen) angeschlossen sein kann.

Da das Verbindungsstück über schwingungsgedämpft ist, können sich die Schwingungen des Abscheiders nicht auf den Anschluss der Fluidleitung und dessen Abdichtung auswirken. Dadurch ist ein einfacher und schnell zu montierender bzw. zu demontierender Anschluss der Fluidleitung und somit eine einfache und schnelle Montage / Demontage des Abscheiders möglich.

Der vorliegend verwendete Begriff "Schwingungen" ist breit auszulegen und umfasst sowohl niederfrequente Schwingungen als auch hochfrequente Schwingungen und Vibrationen. Ferner kann das in der Fluidleitung strömende Fluid ein mehrphasiges Abwassergemisch (z.B. 2- oder 3-phasig), eine Flüssigkeit oder ein Gas sein. Der hierin verwendete Begriff "Luft" ist ebenfalls breit auszulegen und bezeichnet generell ein Gas mit beliebiger Zusammensetzung, welches insbesondere von den übrigen Komponenten des Abwassergemisches abgetrennt bzw. abgesaugt werden soll.

Prinzipiell sind verschiedene Anordnungen des Dämpfungselements denkbar, beispielsweise eine Anordnung im Bereich der Lagerung des Verbindungsstücks am Trägerrahmen, im Bereich des ersten Anschlusses, im Bereich des zweiten Anschlusses oder zwischen erstem und zweitem Anschluss als Teil der Fluidleitung. Im angeschlossenen Zustand ist das Verbindungsstück Teil der über die Fluidleitung hergestellten Fluidverbindung zum Abscheider. Hierfür kann das Verbindungsstück eine entsprechende Bohrung bzw. Fluidkanal etc. aufweisen, welche die beiden Anschlüsse miteinander verbindet. Ferner kann das Verbindungsstück über ein Adapterstück oder direkt am Trägerrahmen befestigt oder einstückig mit dem Trägerrahmen verbunden sein.

In einer Ausführungsform ist vorgesehen, dass das Dämpfungselement am zweiten Anschluss angeordnet oder Teil desselben ist. Dadurch wird das gesamte Verbindungsstück und dadurch auch der Anschluss der Fluidleitung an das Verbindungsstück von den Schwingungen des Abscheiders entkoppelt. Das Dämpfungselement kann ein separates und am zweiten Anschluss angebrachtes oder anbringbares Bauteil sein oder in / an den zweiten Anschluss integriert sein.

In einer weiteren Ausführungsform ist vorgesehen, dass das Dämpfungselement Teil der durch das Verbindungsstück bereitstellbaren Fluidverbindung zwischen der Fluidleitung und dem Fluidanschluss des Abscheiders ist. Das Dämpfungselement weist also insbesondere eine Durchführung für das Fluid auf und kann beispielsweise als flexibles Rohr, als Schlauchstück oder dergleichen ausgebildet sein. Dies ermöglicht einen kompakten Aufbau der erfindungsgemäßen Haltevorrichtung.

In einer weiteren Ausführungsform ist vorgesehen, dass das Dämpfungselement reversibel verformbar bzw. verbiegbar ist und vorzugsweise zumindest teilweise aus einem flexiblen bzw. elastischen Material besteht. Besonders bevorzugt besteht das Dämpfungselement zumindest teilweise aus Gummi. Die Schwingungen des Abscheiders führen somit zu Verformungen des Dämpfungselements, wodurch die Schwingungen gedämpft werden.

**In** einer weiteren Ausführungsform ist vorgesehen, dass das Dämpfungselement eine Dichtung zum flüssigkeits- und/oder gasdichten Abdichten der Fluidverbindung zwischen der Fluidleitung und dem Fluidanschluss des Abscheiders ist, welche über das Verbindungsstück herstellbar ist. Das Dämpfungselement erfüllt somit eine Doppelfunktion. Einerseits dient es dem Entkoppeln der Schwingungen des Abscheiders von dem Anschluss der Fluidleitung an das Verbindungsstück und andererseits dient es selbst der Abdichtung der Fluidleitung. Insbesondere dichtet das Dämpfungselement die Fluidverbindung zwischen dem zweiten Anschluss des Verbindungsstücks und dem Fluidanschluss des Abscheiders (oder einer mit dem Fluidanschluss verbundenen Zwischenleitung) ab. Die durch das Dämpfungselement bereitgestellte Dichtung ist mit anderen Worten schwingungsfest ausgestaltet.

Bei dem Dämpfungselement handelt es sich insbesondere nicht um einen langen Verbindungsschlauch, sondern um ein Dichtelement, welches vorzugsweise direkt an den Fluidanschluss des Abscheiders anschließt. Dadurch wird ein kompakter Aufbau gewährleistet, bei dem sich das Verbindungsstück in der Nähe des Fluidanschlusses des Abscheiders befindet.

**In** einer weiteren Ausführungsform ist vorgesehen, dass das Dämpfungselement ein Schlauchstück ist oder umfasst, welches einen Abschnitt mit variierendem Durchmesser aufweist. Der Abschnitt mit variierendem Durchmesser begünstigt dabei eine reversible Verformbarkeit des Dämpfungselements und stellt eine einfach und kostengünstig herzustellende Lösung dar. Bei dem variierenden Durchmesser kann es sich um den Innendurchmesser und/oder den Außendurchmesser des Schlauchstücks handeln. D.h. es kann vorgesehen sein, dass der Innendurchmesser im Wesentlichen konstant bleibt, während der Außendurchmesser (und damit die Wandstärke) variiert, dass der Außendurchmesser im Wesentlichen konstant bleibt, während der Innendurchmesser (und damit ebenfalls die Wandstärke) variiert oder dass Außendurchmesser und Innendurchmesser beide variieren (beispielsweise gleichermaßen variieren, sodass die Wandstärke im Wesentlichen konstant bleibt).

In einer weiteren Ausführungsform ist vorgesehen, dass das Schlauchstück eine Hülle aufweist, welche im Abschnitt mit variierendem Durchmesser entlang der Flussrichtung bzw. Strömungsrichtung des Fluids im Wesentlichen zick-zack-förmig verläuft. Dabei kann die Außenseite, die Innenseite oder sowohl Außen- als auch Innenseite zick-zack-förmig verlaufen. Der Begriff "zick-zack-förmig" schließt dabei nicht aus, dass Rundungen bzw. wellenförmige Verläufe der Außen- und/oder Innenseite vorgesehen sind.

Das Schlauchstück kann an einem Ende oder an beiden Enden einen sich nach außen und/oder innen verbreiternden bzw. flanschförmigen Bereich aufweisen.

In einer weiteren Ausführungsform sind am Trägerrahmen zwei Verbindungsstücke mit je einem Dämpfungselement vorgesehen, wobei an die zweiten Anschlüsse der Verbindungsstücke je ein Fluidanschluss des Abscheiders anschließbar ist. Die Verbindungsstücke können über ein Adapterstück am Trägerrahmen befestigt sein. Die Anordnung der Verbindungsstücke kann achsensymmetrisch sein. Bei den Fluidanschlüssen des Abscheiders kann es sich beispielsweise um einen Gemischeinlass zum Zuführen eines Abwassergemisches in den Abscheider und/oder einen Luftabzug zum Absaugen von Luft aus dem Abscheider handeln.

In einer weiteren Ausführungsform ist vorgesehen, dass an das Verbindungsstück eine Ventileinheit angeschlossen oder anschließbar ist, durch welche der Zu- oder Abfluss von Fluid zum oder vom Abscheider freigebbar oder blockierbar ist. Bei der Ventileinheit kann es sich um ein Magnetventil handeln. In der mit der Ventileinheit schaltbaren Leitung kann ein gasförmiges, ein flüssiges oder ein aus mehreren Phasen zusammengesetztes Fluid strömen. Vorzugsweise ist die Ventileinheit mit dem ersten Anschluss des Verbindungsstücks verbunden oder verbindbar bzw. auf der Seite des ersten Anschlusses des Verbindungsstücks angeordnet oder anordenbar.

Gemäß der Erfindung ist vorgesehen, dass eine Befestigung des Abscheiders am Trägerrahmen über ein Entkopplungsmittel erfolgt, welches ausgelegt ist, im Abscheider erzeugte Schwingungen zu dämpfen, sodass sich die Schwingungen nicht auf den Trägerrahmen bzw. auf die Struktur, an der der Abscheider über die Haltevorrichtung befestigt oder gelagert ist (z.B. eine Wand oder eine zahnärztliche Absaugvorrichtung), übertragen. Das Entkopplungsmittel ist am Trägerrahmen befestigt oder befestigbar und kann zur Haltevorrichtung oder zum Abscheider gehören. Bei dem Entkopplungsmittel kann es sich um einen Schwingungsdämpfer handeln.

Ferner ist vorgesehen, dass das Entkopplungsmittel eine Linearführung, insbesondere Schwalbenschwanzführung, umfasst, wobei der Abscheider relativ zum Entkopplungsmittel und/oder das Entkopplungsmittel relativ zum Trägerrahmen entlang der Linearführung bewegbar gelagert ist. Die Entkopplung erfolgt also über eine relative Beweglichkeit von Abscheider und Trägerrahmen über das Entkopplungsmittel. Alternativ oder zusätzlich können weitere Dämpfungsmittel, z.B. elastische Dämpfer, vorgesehen sein, um die Dämpfungswirkung zu erzielen oder zu unterstützen.

In einer weiteren Ausführungsform umfasst die Haltevorrichtung ein Halteelement für eine Sensorvorrichtung, insbesondere für eine Sensorvorrichtung, mittels welcher ein Füllstand in einem Sedimentationsbehälter des Abscheiders erfassbar ist. Das Halteelement kann zwischen zwei seitlichen Verbindungsstücken angeordnet sein. Mittels der Sensorvorrichtung kann z.B. ein Zeitpunkt bestimmbar sein, an welchem der Sedimentationsbehälter, welcher im aufgehängten Zustand vorzugsweise im Bereich der Haltevorrichtung bzw. Sensorvorrichtung angeordnet ist, auszutauschen bzw. zu leeren ist.

In einer weiteren Ausführungsform ist vorgesehen, dass der Trägerrahmen ein Befestigungsmittel zur Befestigung der Haltevorrichtung an einer Wand oder einer anderen Vorrichtung aufweist. Das Befestigungsmittel kann mehrere Befestigungselemente, z.B. Bohrungen für Schrauben, Hakenelemente oder dergleichen, umfassen.

Die vorliegende Erfindung betrifft weiterhin einen Abscheider, insbesondere Dentalabscheider, mit einer erfindungsgemäßen Haltevorrichtung. Dabei ergeben sich offensichtlich dieselben Vorteile und Eigenschaften wie für die erfindungsgemäße Haltevorrichtung, weshalb an dieser Stelle auf eine wiederholende Beschreibung verzichtet wird. Bei dem Abscheider kann es sich um einen Abscheider zur Abtrennung eines insbesondere zahnärztlichen Abwassergemisches handeln. Der Abscheider kann ausgelegt sein, eine 2-Phasen-Trennung (insbesondere Flüssigkeit-Luft-Trennung) oder eine 3-Phasen-Trennung (insbesondere Flüssigkeit-Luft-Feststoff-Trennung) durchzuführen und beispielsweise eine drehbare Zentrifuge umfassen.

In einer Ausführungsform ist vorgesehen, dass der Abscheider ein Gehäuse umfasst, welches einen Befestigungsrahmen aufweist, der mit einem oben beschriebenen Entkopplungsmittel verbunden oder verbindbar ist. Das Entkopplungsmittel ist dabei relativ zum Abscheider bewegbar gelagert (also die schwingungsdämpfende Relativbewegung erfolgt (auch oder nur) zwischen Entkopplungsmittel und Abscheider) und/oder relativ zum Trägerrahmen bewegbar an diesem lagerbar (sodass die schwingungsdämpfende Relativbewegung (auch oder nur) zwischen Entkopplungsmittel und Trägerrahmen erfolgt). Bei dem Befestigungsrahmen muss es sich nicht um einen Rahmen handeln. Vielmehr können entsprechende Befestigungselemente wie z.B. Führungsschienen, Nuten, Vorsprünge, Hakenelemente, Bohrungen oder dergleichen am Gehäuse vorgesehen sein. Bei dem Gehäuse kann es sich um ein Motorgehäuse handeln.

Der Trägerrahmen und/oder das mindestens eine Verbindungsstück können aus Kunststoff, Metall oder einem Verbundwerkstoff gefertigt sein. Auch eine Kombination aus Metall-, Kunststoff und/oder Verbundwerkstoffkomponenten ist möglich.

Weitere Merkmale, Einzelheiten und Vorteile der Erfindung ergeben sich aus den nachfolgend anhand der Figuren erläuterten Ausführungsbeispielen. Es zeigen:
- Figur 1:: eine Haltevorrichtung gemäß einem Ausführungsbeispiel in einer perspektivischen Ansicht;
- Figur 2:: die Haltevorrichtung gemäß Figur 1 in einer Explosionsansicht;
- Figur 3:: die Haltevorrichtung gemäß Figur 2 mit Magnetventil;
- Figur 4:: den Trägerrahmen der Haltevorrichtung und das daran mittels eines Entkopplungsmittels befestigbare Oberteil eines Abscheiders gemäß einem Ausführungsbeispiel in einer perspektivischen Ansicht;
- Figur 5:: eine Draufsicht auf den an der Haltevorrichtung befestigten Abscheider gemäß einem Ausführungsbeispiel; und
- Figur 6:: den Abscheider gemäß Figur 5 in einer perspektivischen Ansicht.

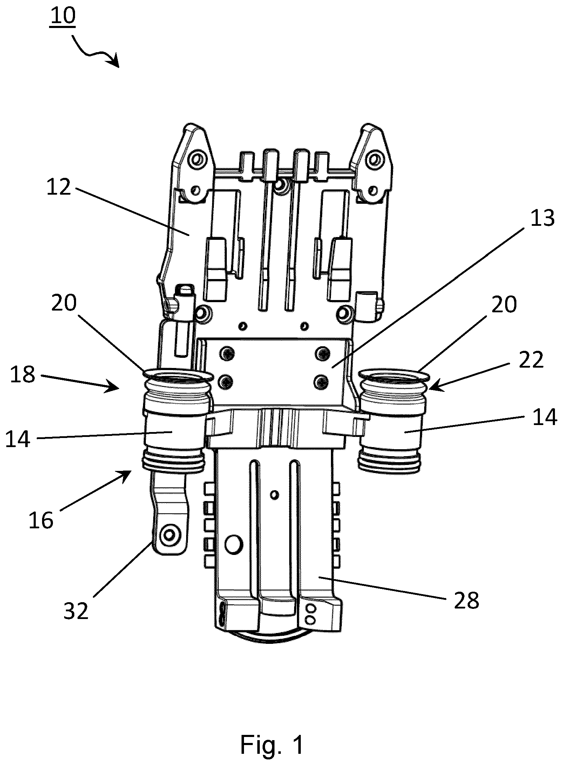

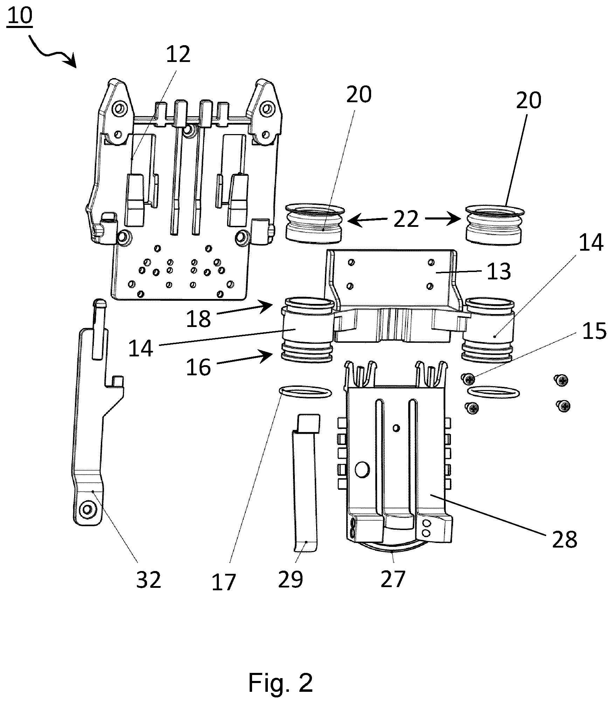

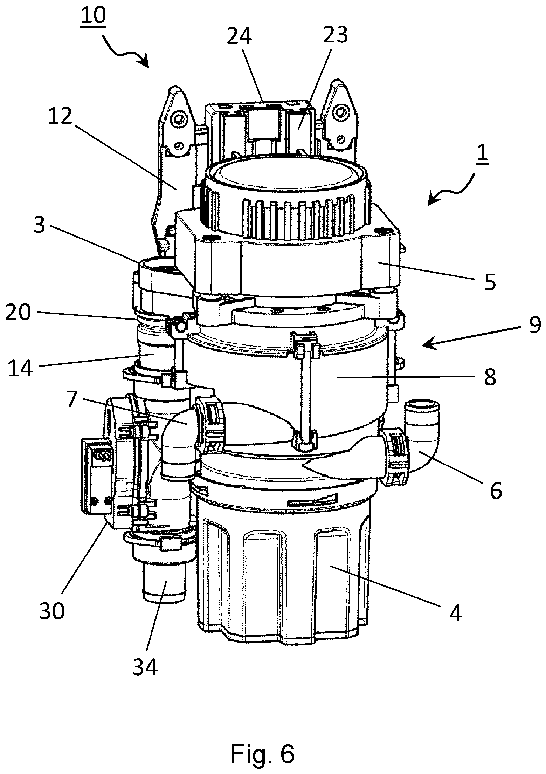

Die Figur 1 zeigt ein Ausführungsbeispiel der Haltevorrichtung 10 in einer perspektivischen Ansicht. Die einzelnen Komponenten der Haltevorrichtung 10 sind in der Figur 2 in einer Explosionsdarstellung gezeigt. Die Haltevorrichtung 10 dient der Befestigung eines Abscheiders 1, insbesondere eines Dentalabscheiders zur Abtrennung eines zahnärztlichen Abwassergemisches. Ein Ausführungsbeispiel eines solchen Abscheiders 1 ist in der Figur 6 gezeigt.

Die Haltevorrichtung 10 umfasst einen im Wesentlichen plattenförmigen Trägerrahmen 12, welcher über mehrere Bohrungen an einer Wand oder einer anderen Vorrichtung wie z.B. einer zahnärztlichen Absaugvorrichtung montierbar ist. An den symmetrischen Trägerrahmen 12 ist über mehrere Schrauben 15 ein Adapterstück 13 montiert, von welchem schräg-seitlich zwei Verbindungsstücke 14 abstehen. Jedes der Verbindungsstücke 14 weist an der Unterseite einen ersten Anschluss 16 und an der Oberseite einen zweiten Anschluss 18 auf, welche durch eine kanal- bzw. rohrartige Ausgestaltung des Verbindungsstücks 14 miteinander in fluidführender Verbindung stehen (d.h. dass ein in den ersten Anschluss 16 einströmendes oder -fließendes Fluid aus dem zweiten Anschluss 18 ausströmt oder -fließt und umgekehrt).

Der hier beispielhaft beschriebene und gezeigte Abscheider 1 weist zwei Fluidanschlüsse 2, 3 auf: einen Gemischeinlass 2, über welchen ein aufzutrennendes Abwassergemisch (beispielsweise ein 2-Pasen-Gemisch mit flüssigen und gasförmigen Bestandteilen oder ein 3-Phasen-Gemisch mit flüssigen, festen und gasförmigen Bestandteilen) in den Abscheider 1 eingebracht werden kann und einen Luftabzug 3, über welchen Luft aus dem Innenraum des Abscheiders 1 abgesaugt und vom Abwassergemisch abgetrennt werden kann, beispielsweise mittels einer hier nicht dargestellten Luftabsaugvorrichtung.

Die Fluidleitungen zur Führung der entsprechenden Fluidvolumenströme zum Gemischeinlass 2 und vom Luftabzug 3 werden an die ersten Anschlüsse 16 der Verbindungsstücke 14 der Haltevorrichtung 10 angeschlossen. Bei den hier nicht näher dargestellten Fluidleitungen handelt es sich insbesondere um Schläuche, welche über entsprechende an den ersten Anschlüssen 16 montierbare Schlauchanschlussstücke 34 anschließbar sind. Über die zweiten Anschlüsse 18 werden Fluidverbindungen zu den Fluidanschlüssen 2, 3 des Abscheiders 1 hergestellt. Die erfindungsgemäße Haltevorrichtung 10 dient neben der Befestigung bzw. Aufhängung des Abscheiders 1 also auch der Befestigung bzw. des Anschlusses der Fluidleitungen für den Abscheider 1. Diese müssen somit nicht direkt an den Abscheider 1 angeschlossen werden, sondern an die Verbindungsstücke 14 der Haltevorrichtung 10.

Während des Betriebs des Abscheiders 1 entstehen Schwingungen, insbesondere aufgrund des für den Antrieb der rotierenden Komponenten wie Laufrad oder Zentrifuge verwendeten Motors des Abscheiders 1. Diese Schwingungen können sich negativ auf die Abdichtungen beim Zu- und Ablauf der Fluidvolumenströme, also auf die Abdichtungen der Fluidleitungen, auswirken. Aus diesem Grund sieht die vorliegende Erfindung als Dichtungselemente schwingungsfeste Dämpfungselemente 20 vor, welche den hochfrequenten Schwingungen des Abscheiders 1 folgen können, ohne dass deren Dichtwirkung nachlässt.

In dem hier gezeigten Ausführungsbeispiel sind die Dämpfungselemente 20 als kurze Schlauchstücke ausgeführt, welche an den zweiten Anschlüssen 18 der Verbindungsstücke 14 angebracht sind (die Dämpfungselemente 20 können auch als Teil der zweiten Anschlüsse 18 betrachtet werden). Die Länge der kurzen Schlauchstücke 20 entspricht ungefähr deren Durchmesser. Prinzipiell sind aber auch längere oder kürzere Schlauchstücke 20 vorstellbar. An die Schlauchstücke 20 werden direkt die Fluidanschlüsse 2, 3 des Abscheiders 1 angeschlossen, wobei die Abdichtung durch Andrücken der entsprechenden Flanschflächen erfolgt.

Die Schlauchstücke 20 bestehen aus einem flexiblen Material (z.B. Gummi) und weisen einen Abschnitt mit variierendem Durchmesser 22 auf, in welchem die Hülle der Schlauchstücke 20 in Fluidvolumenstromrichtung zick-zack-förmig verläuft. Hierbei sind zwei umlaufende Kerben mit geringerem Durchmesser und dazwischen ein Bereich mit größerem Durchmesser vorgesehen, wobei natürlich auch andere Ausgestaltungen denkbar sind. Durch die Zick-Zack-Form können die Schlauchstücke 20 den Schwingungen des Abscheiders 1 folgen und behalten ihre Dichtwirkung bei.

An den dem Abscheider 1 zugewandten Enden weisen die Schlauchstücke 20 jeweils einen flanschförmigen Bereich auf, der an den entsprechenden Fluidanschluss (oder ein daran befestigtes Anschlussteil) gepresst wird. Die ersten Anschlüsse 16 weisen, wie in der Figur 2 zu erkennen ist, umlaufende Nuten auf, in die zur Abdichtung der daran befestigten Fluidleitungen, Schlauchanschlussstücke 34 oder Ventileinrichtungen ringförmige Dichtungselemente bzw. O-Ringe 17 einlegbar sind.

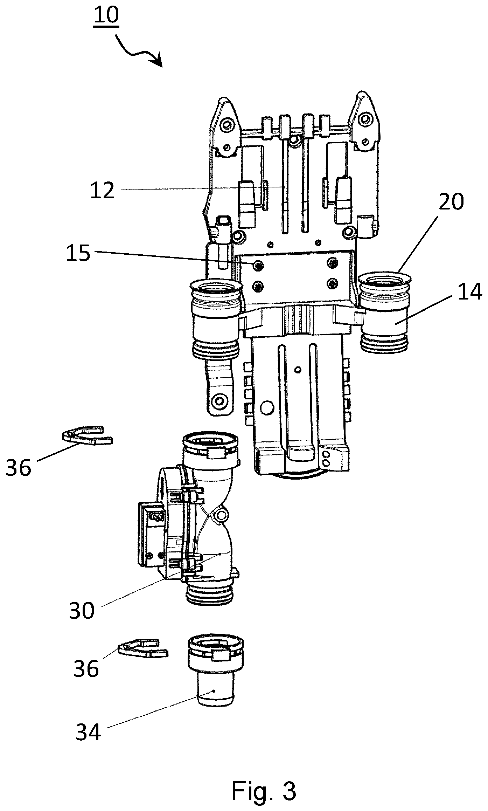

Ferner umfasst die Haltevorrichtung 10 eine Halterung bzw. einen Haltebügel 32 zur Befestigung einer Ventileinrichtung 30 für die Kontrolle des Fluidvolumenstromzuflusses oder -abflusses. In der Figur 3 ist ein Ausführungsbeispiel gezeigt, bei der ein Magnetventil 30 direkt am ersten Anschluss 16 eines der Verbindungsstücke 14 angebracht ist. Das Magnetventil 30 wird über Klemmelemente bzw. Clips 36 mit dem ersten Anschluss 16 und einem Schlauchanschlussstück 34 zur Befestigung der Fluidleitung verbunden. Hierbei kann es sich um ein Magnetventil 30 zum Blockieren und Freigeben der Leitung für den Luftabzug 3 oder den Gemischeinlass 2 handeln. Es können auch Magnetventile 30 für jede Fluidleitung vorgesehen sein.

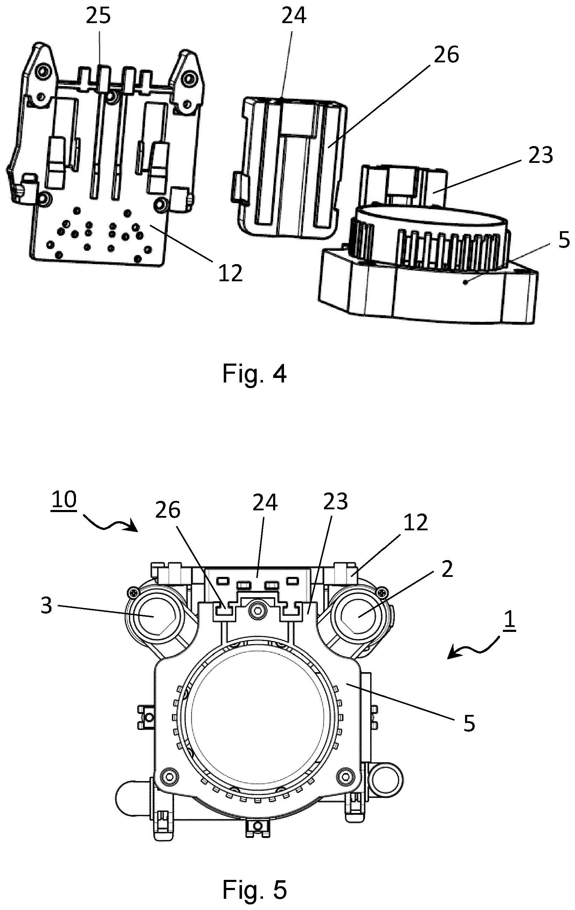

Damit sich die Schwingungen des Abscheiders 1 nicht auf den Trägerrahmen 12 bzw. die Wand oder Vorrichtung, an welcher der Trägerrahmen 12 befestigt ist, übertragen, ist der Abscheider 1 nicht direkt, sondern erfindungsgemäß über ein als Schwingungsdämpfer fungierendes Entkopplungsmittel 24 am Trägerrahmen 12 befestigbar. Die Figur 4 zeigt den Trägerrahmen 12, den Schwingungsdämpfer 24 sowie eine Motorhaube 5 des Abscheiders 1, welche an dessen Oberseite angeordnet ist. Die Motorhaube 5 weist auf der Rückseite einen Befestigungsrahmen 23 auf, welcher zwei von oben nach unten (entlang der Längsachse des Abscheiders 1) verlaufende Führungsschienen umfasst. Der Schwingungsdämpfer 24 weist auf einer Seite zwei entsprechende Linearführungen 26 auf, die in die Führungsschienen eingeschoben werden. Wie in der Figur 5, welche eine Draufsicht auf den an der Haltevorrichtung 10 befestigten Abscheider 1 zeigt, schematisch dargestellt ist, kann es sich bei den Linearführungen 26 um Schwalbenschwanzverbindungen handeln. Die Verbindung zwischen Schwingungsdämpfer 24 und Motorhaube 5 bzw. Befestigungsrahmen 23 erlaubt eine translatorische Relativbewegung zwischen Schwingungsdämpfer 24 und Motorhaube 5 entlang der Linearführungen 26. Dadurch werden Schwingungen des Abscheiders 1 gedämpft. Der Schwingungsdämpfer 24 ist über oben am Trägerrahmen 12 angeordnete Befestigungselemente 25 am Trägerrahmen 12 befestigbar bzw. einhängbar. Hier ist ebenfalls eine Lösung denkbar, bei der alternativ oder zusätzlich eine Dämpfung zwischen Abscheider 1 und Trägerrahmen 12 über elastische Dämpfungselemente oder dergleichen erfolgt. Der Schwingungsdämpfer 24 kann Teil der erfindungsgemäßen Haltevorrichtung 10 sein oder zum Abscheider 1 gehören. Dementsprechend können die Befestigungselemente 25 und/oder das Entkopplungsmittel 24 als Befestigungsmittel zur Befestigung des Abscheiders 1 an der Haltevorrichtung 10 angesehen werden.

Die Figur 6 zeigt den an der Haltevorrichtung 10 befestigten Abscheider 1, welcher im unteren Bereich einen abnehmbaren Sedimentationsbehälter 4 aufweist. Darin lagern sich über einen Direkteinlass 6 eingebrachte und/oder über eine innerhalb des Abscheidergehäuses 8 angeordnete Zentrifuge 9 abgeschiedene Feststoffpartikel ab. Es kann vorgesehen sein, dass mittels einer unterhalb der Zentrifuge 9 angeordneten Pumpe (nicht gezeigt) überstehende Flüssigkeit aus dem Sedimentationsbehälter 4 in die Zentrifuge 9 gefördert werden kann. Über einen Flüssigkeitsauslass 7 wird die aus dem Abwassergemisch abgetrennte Flüssigkeit abgeführt.

Um den Füllstand der festen Bestandteile im Sedimentationsbehälter 4 zu erfassen, kann eine beispielsweise optische Sensorvorrichtung vorgesehen sein, welche außerhalb des Sedimentationsbehälters 4 angeordnet bzw. befestigt ist. Hierfür weist die erfindungsgemäße Haltevorrichtung 10 in dem hier gezeigten Ausführungsbeispiel ein Halteelement 28 auf, welches unten am Adapterstück 13 befestigt oder befestigbar ist und im Wesentlichen zwischen den Fluidleitungen angeordnet ist. Die Haltevorrichtung 28 weist ein Aufnahmemittel 27 zur Befestigung der Sensorvorrichtung auf, welches derart ausgebildet ist, dass sich die Sensorvorrichtung in einer geeigneten Höhe neben dem Sedimentationsbehälter 4 befindet, wenn der Abscheider 1 an der Haltevorrichtung 10 befestigt ist. Um die Sensorvorrichtung gegen den Sedimentationsbehälter 4 (bzw. am Sedimentationsbehälter 4 vorgesehene Komponenten, die mit der Sensorvorrichtung für die Füllstandmessung zusammenwirken) zu drücken, umfasst das Halteelement 28 ein als Federbügel ausgestaltetes Federelement 29 (vgl. Figur 2). Dieses ist an der dem Sedimentationsbehälter 4 abgewandten Seite des Halteelements 28 angeordnet und drückt dieses (bzw. einen mittig ausgebildeten Zinken) in Richtung Sedimentationsbehälter 4.

Die erfindungsgemäße Haltevorrichtung 10 stellt ein einfaches und schwingungsfestes Aufhängesystem für die Fluidleitungen zum und vom Abscheider 1 zur Verfügung, welches eine schnelle und einfache Montage und Demontage erlaubt, ohne hier entsprechende Schlauchstücke über Schellen oder dergleichen anschließen zu müssen.

### Bezugszeichenliste:

- 1: Abscheider
- 2: Fluidanschluss (Gemischeinlass)
- 3: Fluidanschluss (Luftabzug)
- 4: Sedimentationsbehälter
- 5: Motorgehäuse
- 6: Direkteinlass
- 7: Flüssigkeitsauslass
- 8: Abscheidergehäuse
- 9: Zentrifuge
- 10: Haltevorrichtung
- 12: Trägerrahmen
- 13: Adapterstück
- 14: Verbindungsstück
- 15: Schrauben
- 16: Erster Anschluss
- 17: Dichtungselement
- 18: Zweiter Anschluss
- 20: Dämpfungselement
- 22: Abschnitt mit variierendem Durchmesser
- 23: Befestigungsrahmen
- 24: Entkopplungsmittel
- 25: Befestigungselement
- 26: Linearführung
- 27: Aufnahmemittel
- 28: Halteelement
- 29: Federelement
- 30: Ventileinheit (Magnetventil)
- 32: Halter
- 34: Schlauchanschlussstück
- 36: Klemmelement

## Patentansprüche

1. Haltevorrichtung (10) für einen Abscheider (1), insbesondere einen Dentalabscheider, mit einem Trägerrahmen (12) und einem Befestigungsmittel zur Befestigung des Abscheiders (1) an der Haltevorrichtung (10), ferner umfassend mindestens ein mit dem Trägerrahmen (12) verbundenes Verbindungsstück (14) mit einem ersten Anschluss (16) und einem mit dem ersten Anschluss (16) fluidleitend verbundenen zweiten Anschluss (18), wobei an den ersten Anschluss (16) eine Fluidleitung zum Zu- oder Abführen eines Fluids zum oder vom Abscheider (1) und an den zweiten Anschluss (18) ein Fluidanschluss (2, 3) des Abscheiders (1) anschließbar ist und wobei am Verbindungsstück (14) ein Dämpfungselement (20) zur Dämpfung von Schwingungen des Abscheiders (1) vorgesehen ist, aufweisend ein am Trägerrahmen (12) befestigtes oder befestigbares Entkopplungsmittel (24), über welches der Abscheider (1) am Trägerrahmen (12) befestigbar ist und welches ausgelegt ist, im Abscheider (1) erzeugte Schwingungen zu dämpfen, wobei das Entkopplungsmittel (24) eine Linearführung (26) umfasst, welche eine translatorische Relativbewegung zwischen Entkopplungsmittel (24) und Abscheider (1) erlaubt, um Schwingungen des Abscheiders (1) zu dämpfen, und der Abscheider (1) relativ zum Entkopplungsmittel (24) entlang der Linearführung (26) bewegbar gelagert ist.

2. Haltevorrichtung (10) nach Anspruch 1, **dadurch gekennzeichnet, dass** das Dämpfungselement (20) am zweiten Anschluss (18) angeordnet oder Teil desselben ist.

3. Haltevorrichtung (10) nach Anspruch 1 oder 2, **dadurch gekennzeichnet, dass** das Dämpfungselement (20) Teil der durch das Verbindungsstück (14) bereitstellbaren Fluidverbindung zwischen der Fluidleitung und dem Fluidanschluss (2, 3) des Abscheiders (1) ist.

4. Haltevorrichtung (10) nach einem der vorhergehenden Ansprüche, **dadurch gekennzeichnet, dass** das Dämpfungselement (20) reversibel verformbar ist und vorzugsweise zumindest teilweise aus einem flexiblen Material, insbesondere aus Gummi, besteht.

5. Haltevorrichtung (10) nach Anspruch 4, **dadurch gekennzeichnet, dass** das Dämpfungselement (20) eine Dichtung zum flüssigkeits- und/oder gasdichten Abdichten der mit dem Verbindungsstück (14) herstellbaren Fluidverbindung ist.

6. Haltevorrichtung (10) nach einem der vorhergehenden Ansprüche, **dadurch gekennzeichnet, dass** das Dämpfungselement (20) ein Schlauchstück ist oder umfasst, welches einen Abschnitt (22) mit variierendem Durchmesser aufweist.

7. Haltevorrichtung (10) nach Anspruch 6, **dadurch gekennzeichnet, dass** das Schlauchstück (20) eine Hülle aufweist, welche im Abschnitt (22) mit variierendem Durchmesser entlang der Flussrichtung des Fluids im Wesentlichen zick-zack-förmig verläuft.

8. Haltevorrichtung (10) nach einem der vorhergehenden Ansprüche, **dadurch gekennzeichnet, dass** am Trägerrahmen (12) zwei Verbindungsstücke (14) mit je einem Dämpfungselement (20) vorgesehen sind, wobei an die zweiten Anschlüsse (18) der Verbindungsstücke (14) je ein Fluidanschluss (2, 3) des Abscheiders (1), insbesondere ein Gemischeinlass (2) zum Zuführen eines Abwassergemisches in den Abscheider (1) und ein Luftabzug (3) zum Absaugen von Luft aus dem Abscheider (1), anschließbar ist.

9. Haltevorrichtung (10) nach einem der vorhergehenden Ansprüche, **dadurch gekennzeichnet, dass** an das Verbindungsstück (14) eine Ventileinheit (30), insbesondere ein Magnetventil, angeschlossen oder anschließbar ist, durch welche der Zu- oder Abfluss von Fluid zum oder vom Abscheider (1) freigebbar oder blockierbar ist, wobei die Ventileinheit (30) vorzugsweise mit dem ersten Anschluss (16) des Verbindungsstücks (14) verbunden oder verbindbar ist.

10. Haltevorrichtung (10) nach einem der vorhergehenden Ansprüche, **dadurch gekennzeichnet, dass** die Linearführung (26) eine Schwalbenschwanzführung ist.

11. Haltevorrichtung (10) nach einem der vorhergehenden Ansprüche, **dadurch gekennzeichnet, dass** ein Halteelement (28) für eine Sensorvorrichtung vorgesehen ist, insbesondere für eine Sensorvorrichtung, mittels welcher ein Füllstand in einem Sedimentationsbehälter (4) des Abscheiders (1) erfassbar ist.

12. Haltevorrichtung (10) nach einem der vorhergehenden Ansprüche, **dadurch gekennzeichnet, dass** der Trägerrahmen (12) ein Befestigungsmittel zur Befestigung der Haltevorrichtung (10) an einer Wand oder einer anderen Vorrichtung aufweist.

13. Abscheider (1), insbesondere Dentalabscheider, mit einer Haltevorrichtung (10) nach einem der vorhergehenden Ansprüche.

14. Abscheider (1) nach Anspruch 13, **dadurch gekennzeichnet, dass** ein Gehäuse (5) des Abscheiders (1) einen Befestigungsrahmen (23) aufweist, welcher mit dem Entkopplungsmittel (24) verbunden oder verbindbar ist.

## Claims

1. Holding device (10) for a separator (1), in particular a dental debris separator, comprising a support frame (12) and a fastening means for fastening the separator (1) to the holding device (10), further comprising at least one connecting piece (14) that is connected to the support frame (12) and comprises a first connection (16) and a second connection (18) that is fluidically connected to the first connection (16), wherein a fluid line for feeding a fluid to the separator (1) or discharging a fluid from said separator can be connected to the first connection (16) and a fluid connection (2, 3) of the separator (1) can be connected to the second connection (18), and wherein a damping element (20) for damping vibrations of the separator (1) is provided on the connecting piece (14),
comprising a decoupling means (24), which is or can be fastened to the support frame (12), via which the separator (1) can be fastened to the support frame (12), and which is designed to damp vibrations generated in the separator (1), wherein the decoupling means (24) comprises a linear guide (26), which allows for a translational relative movement between the decoupling means (24) and the separator (1) in order to damp vibrations of the separator (1), and the separator (1) is movably mounted relative to the decoupling means (24) along the linear guide (26).

2. Holding device (10) according to claim 1, **characterised in that** the damping element (20) is arranged on the second connection (18) or is a part thereof.

3. Holding device (10) according to claim 1 or 2, **characterised in that** the damping element (20) is part of the fluid connection that can be provided by the connecting piece (14) between the fluid line and the fluid connection (2, 3) of the separator (1).

4. Holding device (10) according to any of the preceding claims, **characterised in that** the damping element (20) is reversibly deformable and preferably consists, at least in part, of a flexible material, in particular of rubber.

5. Holding device (10) according to claim 4, **characterised in that** the damping element (20) is a seal for the liquid-tight and/or gas-tight sealing of the fluid connection that can be established by the connecting piece (14).

6. Holding device (10) according to any of the preceding claims, **characterised in that** the damping element (20) is or comprises a hose piece, which comprises a portion (22) having a varying diameter.

7. Holding device (10) according to claim 6, **characterised in that** the hose piece (20) comprises a sleeve, which extends substantially in a zigzag shape in the portion (22) having a varying diameter in the flow direction of the fluid.

8. Holding device (10) according to any of the preceding claims, **characterised in that** two connecting pieces (14) which each comprise a damping element (20) are provided on the support frame (12), wherein a fluid connection (2, 3) of the separator (1), in particular a mixture inlet (2) for feeding a wastewater mixture into the separator (1) and an air exhaust (3) for suctioning air out of the separator (1), can be connected to each of the second connections (18) of the connecting pieces (14).

9. Holding device (10) according to any of the preceding claims, **characterised in that** a valve unit (30), in particular a solenoid valve, by means of which the inflow or outflow of fluid to or from the separator (1) can be enabled or disabled, is or can be connected to the connecting piece (14), wherein the valve unit (30) preferably is or can be connected to the first connection (16) of the connecting piece (14).

10. Holding device (10) according to any of the preceding claims, **characterised in that** the linear guide (26) is a dovetail guide.

11. Holding device (10) according to any of the preceding claims, **characterised in that** a holding element (28) for a sensor device is provided, in particular for a sensor device by means of which a fill level in a sedimentation container (4) of the separator (1) can be detected.

12. Holding device (10) according to any of the preceding claims, **characterised in that** the support frame (12) comprises a fastening means for fastening the holding device (10) to a wall or another device.

13. Separator (1), in particular a dental debris separator, comprising a holding device (10) according to any of the preceding claims.

14. Separator (1) according to claim 13, **characterised in that** a housing (5) of the separator (1) comprises a fastening frame (23), which is or can be connected to the decoupling means (24).

## Revendications

1. Dispositif de maintien (10) pour un séparateur (1), notamment un séparateur dentaire, avec un cadre de support (12) et un moyen de fixation pour fixer le séparateur (1) sur le dispositif de maintien (10), comprenant en outre au moins une pièce de liaison (14) reliée au cadre de support (12) avec un premier raccord (16) et un deuxième raccord (18) relié au premier raccord (16) de manière conductrice de fluide, une conduite de fluide pour l'amenée ou l'évacuation d'un fluide vers ou depuis le séparateur (1) pouvant être raccordée au premier raccord (16) et un raccord de fluide (2, 3) du séparateur (1) pouvant être raccordé au deuxième raccord (18), et un élément d'amortissement (20) étant prévu sur la pièce de liaison (14) pour amortir les vibrations du séparateur (1),
présentant un moyen de découplage (24) fixé ou pouvant être fixé sur le cadre de support (12), par l'intermédiaire duquel le séparateur (1) peut être fixé sur le cadre de support (12) et qui est conçu pour amortir les vibrations générées dans le séparateur (1), le moyen de découplage (24) comprenant un guide linéaire (26) qui permet un mouvement relatif de translation entre le moyen de découplage (24) et le séparateur (1) afin d'amortir les vibrations du séparateur (1), et le séparateur (1) étant monté mobile par rapport au moyen de découplage (24) le long du guide linéaire (26).

2. Dispositif de maintien (10) selon la revendication 1, **caractérisé en ce que** l'élément d'amortissement (20) est agencé sur le deuxième raccord (18) ou fait partie de celui-ci.

3. Dispositif de maintien (10) selon la revendication 1 ou 2, **caractérisé en ce que** l'élément d'amortissement (20) fait partie de la liaison fluidique entre la conduite de fluide et le raccord de fluide (2, 3) du séparateur (1) pouvant être fournie par la pièce de liaison (14).

4. Dispositif de maintien (10) selon l'une quelconque des revendications précédentes, **caractérisé en ce que** l'élément d'amortissement (20) est déformable de manière réversible et est de préférence constitué au moins partiellement d'un matériau flexible, notamment de caoutchouc.

5. Dispositif de maintien (10) selon la revendication 4, **caractérisé en ce que** l'élément d'amortissement (20) est un joint d'étanchéité destiné à assurer l'étanchéité aux liquides et/ou aux gaz de la liaison fluidique pouvant être établie avec la pièce de liaison (14).

6. Dispositif de maintien (10) selon l'une quelconque des revendications précédentes, **caractérisé en ce que** l'élément d'amortissement (20) est ou comprend un tronçon de tuyau flexible présentant une section (22) de diamètre variable.

7. Dispositif de maintien (10) selon la revendication 6, **caractérisé en ce que** le tronçon de tuyau (20) présente une enveloppe qui, dans la section (22) de diamètre variable, s'étend essentiellement en zigzag dans la direction d'écoulement du fluide.

8. Dispositif de maintien (10) selon l'une quelconque des revendications précédentes, **caractérisé en ce que** deux pièces de liaison (14) avec chacune un élément d'amortissement (20) sont prévues sur le cadre de support (12), un raccord de fluide (2, 3) du séparateur (1), notamment une entrée de mélange (2) pour l'amenée d'un mélange d'eau usée dans le séparateur (1) et une sortie d'air (3) pour l'aspiration de l'air hors du séparateur (1), pouvant être raccordé à chacun des deuxièmes raccords (18) des pièces de liaison (14).

9. Dispositif de maintien (10) selon l'une quelconque des revendications précédentes, **caractérisé en ce qu'**une unité de vanne (30), notamment une électrovanne, est raccordée ou peut être raccordée à la pièce de liaison (14), par laquelle l'arrivée ou l'évacuation de fluide vers ou depuis le séparateur (1) peut être libérée ou bloquée, l'unité de vanne (30) étant de préférence reliée ou pouvant être reliée au premier raccord (16) de la pièce de liaison (14).

10. Dispositif de maintien (10) selon l'une quelconque des revendications précédentes, **caractérisé en ce que** le guide linéaire (26) est un guide en queue d'aronde.

11. Dispositif de maintien (10) selon l'une quelconque des revendications précédentes, **caractérisé en ce qu'**un élément de maintien (28) est prévu pour un dispositif de capteur, notamment pour un dispositif de capteur au moyen duquel un niveau de remplissage dans un réservoir de sédimentation (4) du séparateur (1) peut être détecté.

12. Dispositif de maintien (10) selon l'une quelconque des revendications précédentes, **caractérisé en ce que** le cadre de support (12) présente un moyen de fixation pour fixer le dispositif de maintien (10) à un mur ou à un autre dispositif.

13. Séparateur (1), notamment séparateur dentaire, avec un dispositif de maintien (10) selon l'une quelconque des revendications précédentes.

14. Séparateur (1) selon la revendication 13, **caractérisé en ce qu'**un boîtier (5) du séparateur (1) présente un cadre de fixation (23) qui est relié ou peut être relié au moyen de découplage (24).
